# EUROPÄISCHE PATENTANMELDUNG

(11) **EP 4 552 939 A1**
(43) Veröffentlichungstag der Anmeldung: **14.05.2025**
(21) Anmeldenummer: 24202221.8
(22) Anmeldetag: 24.09.2024
(51) Int. Cl.: B60W 30/16, B60K 31/00

(54) **VERFAHREN ZUR LÄNGSFÜHRUNG EINES FAHRZEUGS IN BEZUG ZU EINEM VORAUSFAHRENDEN VORDERFAHRZEUG MITTELS EINES ELEKTRONISCHEN ABSTANDSHALTESYSTEMS SOWIE EIN ABSTANDSHALTESYSTEM FÜR EIN FAHRZEUG**

(30) Priorität: 08.11.2023 DE 102023211070
(71) Anmelder: VOLKSWAGEN AG, 38440 Wolfsburg (DE)
(72) Erfinder: Dobkowitz, Dirk, 38106 Braunschweig (DE); Kaste, Dr. Jonas, 38102 Braunschweig (DE); Kallmeyer, Dr. Felix, 38448 Wolfsburg (DE)

(57) **Zusammenfassung**

Verfahren zur Längsführung eines Fahrzeugs (1) in Bezug zu einem vorausfahrenden Vorderfahrzeug (2) mittels eines elektronischen Abstandshaltesystems (3), aufweisend die Schritte:
a) Bereitstellen von einem Umgebungsparameter (8) betreffend eine Umgebung des Fahrzeugs (1);
b) Bereitstellen eines Sollabstands (9), mit welchem das Fahrzeug (1) dem Vorderfahrzeug (2) folgen soll;
c) Bereitstellen von Beschleunigungs- und/oder Bremsinformation betreffend das vor dem Fahrzeug (1) fahrende Vorderfahrzeug (2);
d) Zuordnen des Vorderfahrzeugs (2) zu einer von zumindest zwei verschiedenen, vorgegebenen Fahrverhaltensklassen abhängig von dem Umgebungsparameter (8) und der Beschleunigungs- und/oder Bremsinformation;
e) Bestimmen einer zumindest temporär erlaubten Abweichung (10) von dem bereitgestellten Sollabstand (9) abhängig von der zugeordneten Fahrverhaltensklasse;
f) Zumindest temporäres Längsführen des Fahrzeugs (1) mit dem Abstandshaltesystem (3) als Nachfolgen zu dem Vorderfahrzeug (2) abhängig von dem Sollabstand (9) und der bestimmten, erlaubten Abweichung (10).

## Beschreibung

Ein Aspekt der Erfindung betrifft ein Verfahren zur Längsführung eines Fahrzeugs in Bezug zu einem vorausfahrenden Vorderfahrzeug mittels eines elektronischen Abstandshaltesystems. Ein weiterer Aspekt der Erfindung betrifft ein Abstandshaltesystem für ein Fahrzeug.

Es sind elektronische Abstandshaltesysteme zur Regelung eines Abstands zu einem vorausfahrenden Fahrzeug bekannt, welche allgemein als Adaptive Cruise Control (ACC)-Systeme bezeichnet werden. Oft richtet sich ein zu regelnder Abstand zu einem vorausfahrenden Vorderfahrzeug nach einer Momentangeschwindigkeit des Fahrzeugs. Zusätzlich hat ein Fahrer des Fahrzeugs gegebenenfalls die Möglichkeit den Abstand stufenweise zu variieren.

Aus der DE 10 2005 026 065 A1 ist ein adaptiver Geschwindigkeitsregler mit situationsabhängiger Dynamikanpassung bekannt.

Nachteilig bei den bekannten Verfahren und System zur Längsführung ist es, dass aufgrund von fest vorgegebenen Sollabständen, die bei der Folgefahrt des Fahrzeugs zu einem vorausfahrenden Fahrzeug einzuhalten sind, unkomfortable Fahrmanöver entstehen können und dadurch auch Verkehrsbeeinträchtigungen, insbesondere auch bezüglich eines homogenen Verkehrsflusses entstehen können. Gerade dann, wenn das Vorderfahrzeug viele und/oder starke Verzögerungen und Beschleunigungen vornimmt, werden diese dann nahezu gleich von dem Folgefahrzeug vollzogen. Dadurch können auch unökonomische Fahrmanöver entstehen, die einen erhöhten Energieverbrauch, als Kraftstoff und/oder elektrische Energie des Folgefahrzeugs nach sich ziehen.

Der Erfindung liegt die Aufgabe zugrunde ein Verfahren und ein elektronisches Abstandshaltesystem für ein Fahrzeug bereitzustellen, um die Längsführung des Fahrzeugs zu verbessern.

Die Aufgabe wird durch die Gegenstände der unabhängigen Ansprüche gelöst. Vorteilhafte Weiterbildungen der Erfindung sind durch die abhängigen Ansprüche, die folgende Beschreibung sowie Figuren definiert.

Ein Aspekt der Erfindung betrifft ein Verfahren zur Längsführung eines Fahrzeugs in Bezug zu einem vorausfahrenden Vorderfahrzeug mittels eines elektronischen Abstandshaltesystems. Das Verfahren weist insbesondere folgende Schritte auf:
a) Insbesondere Bereitstellen von zumindest einem Umgebungsparameter betreffend eine Umgebung des Fahrzeugs an ein Auswertesystem;
b) Insbesondere Bereitstellen eines Sollabstands, mit welchem das Fahrzeug dem Vorderfahrzeug folgen soll, an das Auswertesystem;
c) Insbesondere Bereitstellen von Beschleunigungs- und/oder Bremsinformation betreffend das vor dem Fahrzeug fahrende Vorderfahrzeug an das Auswertesystem;
d) Insbesondere Zuordnen des Vorderfahrzeugs zu einer von zumindest zwei verschiedenen, vorgegebenen Fahrverhaltensklassen abhängig von dem Umgebungsparameter und der Beschleunigungs- und/oder Bremsinformation mit dem Auswertesystem;
e) Insbesondere Bestimmen einer zumindest temporär erlaubten Abweichung von dem bereitgestellten Sollabstand abhängig von der zugeordneten Fahrverhaltensklasse des Vorderfahrzeugs mit dem Auswertesystem;
f) Insbesondere zumindest temporäres Längsführen des Fahrzeugs mit dem Abstandshaltesystem als Nachfolgen zu dem Vorderfahrzeug abhängig von dem Sollabstand und der bestimmten, erlaubten Abweichung.

Durch dieses Verfahren ist eine vorausschauende Längsführung des Fahrzeugs ermöglicht. Dadurch wird ein Fahrkomfort erhöht. Insbesondere werden durch das Verfahren ruckartige Beschleunigungen und/oder Verzögerungen des Fahrzeugs reduziert. Es ist also erreicht, dass bei aktiviertem Längsführungsassistenzsystem, insbesondere einem Abstandshaltesystem, des Fahrzeugs kein stures Folgen auf Basis eines fest vorgegebenen Sollabstands, der bestmöglich zu Vorderfahrzeug einzuhalten ist, erfolgt. Vielmehr ist mit dem Verfahren eines temporäre dynamische Änderung ermöglicht. Es ist also gewollt und bestimmungsgemäß vorgesehen, dass dieser Sollabstand bewusst adaptiert wird. Somit lässt sich eine Kopplung des Fahrzeugs an das Vorderfahrzeug bei der Längsführung erreichen, aber dennoch eine gewisse Entkopplung ermöglichen, um ein in Toleranzen abweichendes Fahrmanöver, insbesondere bezüglich dem Verzögern und/oder Beschleunigen, des Fahrzeugs zum Vorderfahrzeug durchführen zu können. Damit kann auch bei beispielweise ruckartiger und somit sehr inhomogener Fahrweise des Vorderfahrzeugs eine im Vergleich dazu homogenere Folgefahrt des Fahrzeugs durchgeführt werden. Dennoch ist auch dann die Folgefahrt sicher. Insbesondere ist mit dem Verfahren auch eine komfortablere Fahrweise des Folgefahrzeugs ermöglicht. Vorteilhaft ist es mit dem Verfahren auch erreicht, dass bei einer bezüglich des Energieverbrauchs ineffizienteren Fahrweise des Vorderfahrzeus eine effizientere Fahrweise des Fahrzeugs beziehungsweise des Folgefahrzeugs ermöglicht wird.

Ein Umgebungsparameter ist beispielsweise eine Geschwindigkeitsbegrenzung, und/oder ein Fahrbahnverlauf, beispielsweise eine Gerade oder eine Kurve, insbesondere eine Kurvenkrümmung, und/oder ein Verkehrsaufkommen in einer Umgebung des Vorderfahrzeugs und/oder eine Fahrbahnart, beispielsweise innerorts, außerorts, Landstraße, Schnellstraße oder Autobahn. Insbesondere werden mehrere, insbesondere der hier aufgezählten, Umgebungsparameter bereitgestellt.

Insbesondere wird der Umgebungsparameter mittels zumindest einer Erfassungseinheit eines Erfassungssystems erfasst. Insbesondere weist das Fahrzeug die zumindest eine Erfassungseinheit auf. Es ist auch möglich, dass Teile des Erfassungssystems extern zum Fahrzeug sind. Insbesondere werden mehrere Umgebungsparameter, insbesondere mit mehreren Erfassungseinheiten des Erfassungssystems, erfasst. Die Beschleunigungs- und/oder Bremsinformation wird insbesondere mit zumindest einer weiteren Erfassungseinheit des Erfassungssystems erfasst.

Der Sollabstand ist insbesondere ein im Betrieb des elektronischen Abstandshaltesystems einzustellender Sollabstand zwischen dem Fahrzeug, welches das elektronische Abstandshaltesystem aufweist, und einem aktuell vorausfahrendem Fahrzeug. Der Sollabstand kann eine Entfernung sein. Der Sollabstand kann alternativ zum Beispiel aber auch eine zeitliche Angabe sein oder charakterisieren, beispielweise eine Zeitlücke sein. Die Zeitlücke ist insbesondere eine Zeitdauer, die das Fahrzeug zum Erreichen des Vorderfahrzeugs benötigt.

Insbesondere wird die Abweichung derart bestimmt, dass ein minimaler Sicherheitsabstand zum Vorderfahrzeug nicht unterschritten wird.

Zum Zuordnen des Vorderfahrzeugs zu einer der zumindest zwei verschiedenen Fahrverhaltensklassen wird insbesondere die Beschleunigungs- und/oder Bremsinformation in, insbesondere örtlicher und/oder zeitlicher, Verknüpfung mit dem Umgebungsparameter analysiert. Insbesondere ist durch diese Verknüpfung ein Fahrverhalten charakterisiert. Dadurch wird das Vorderfahrzeug verbessert der Fahrverhaltensklasse zugeordnet, die dem tatsächlichen Fahrverhalten des Vorderfahrzeugs entspricht.

Es werden zumindest zwei verschiedene Fahrverhaltensklassen vorgegeben. Bei nur zwei Fahrverhaltensklassen wird das Verfahren schneller und mit reduziertem Rechenaufwand durchgeführt. Beispielsweise repräsentiert eine erste der zumindest zwei Fahrverhaltensklassen ein vorausschauendes, homogenes Fahrverhalten des Vorderfahrzeugs. Beispielsweise repräsentiert eine zweite der zumindest zwei Fahrverhaltensklassen ein ruckartiges, inhomogenes Fahrverhalten des Vorderfahrzeugs. Insbesondere sind noch weitere Fahrverhaltensklassen möglich, die diese Extreme unterteilen. Beispielsweise repräsentieren weitere Fahrverhaltensklassen folgende Fahrverhalten des Vorderfahrzeugs: unberechenbar, ruckartig, nervös, souverän, glatt. Abhängig von den weiteren Fahrverhaltensklassen wird die Abweichung passgenauer bestimmt.

Insbesondere ist jeder der zumindest zwei Fahrverhaltensklassen eine maximale Abweichung von dem bereitgestellten Sollabstand zugeordnet. Beispielsweise ist die maximale Abweichung, die der ersten Fahrverhaltensklasse zugeordnet ist, kleiner als die maximale Abweichung, die der zweiten Fahrverhaltensklasse zugeordnet ist. Also wird zum Beispiel ein tatsächlicher Abstand zwischen dem Fahrzeug und dem Vorderfahrzeug bei einem homogenen Fahrverhalten des Vorderfahrzeugs weniger variiert als bei einem Vorderfahrzeug mit einem inhomogenen Fahrverhalten. Dadurch erfolgt die Entkoppelung zum Vorderfahrzeug nur so weit wie nötig, um den Fahrkomfort zu erhöhen und einen Energieverbrauch des Fahrzeugs zu reduzieren.

Zumindest einige Schritte des Verfahrens können bezüglich einer Reihenfolge zeitlich vertauscht oder zumindest teilweise überlappend ausgeführt werden.

Insbesondere wird durch die temporäre Abweichung von dem bereitgestellten Sollabstand ein inhomogenes Fahrverhalten des Vorderfahrzeugs kompensiert, sodass sich dieses nicht auf das Fahrzeug überträgt.

In einem Ausführungsbeispiel wird als Beschleunigungs- und/oder Bremsinformation zumindest eine der folgenden Größen berücksichtigt:
- eine Anzahl von Änderungen von Beschleunigungs- und/oder Bremsvorgängen des Vorderfahrzeugs in einem Zeitintervall,
- eine Stärke der Beschleunigung und/oder des Bremsens bei einem Bremsvorgang und/oder Beschleunigungsvorgang des Vorderfahrzeugs,
- eine Zeitdifferenz zwischen Beschleunigungs- und/oder Bremsvorgängen des Vorderfahrzeugs,
- ein Verhältnis von einer Zeitdauer eines Beschleunigungsvorgangs zu einer Zeitdauer eines Bremsvorgangs des Vorderfahrzeugs.

Insbesondere wird zumindest eine dieser Größen als Beschleunigungs- und/oder Bremsinformation mit dem Erfassungssystem erfasst und in einer Speichereinheit des Auswertesystems gespeichert. Diese Größen können einfach, schnell und zuverlässig erfasst werden. Weiterhin charakterisieren diese Größen das Fahrverhalten des Vorderfahrzeugs, insbesondere in Verknüpfung mit dem Umgebungsparameter.

Bei der Analyse wird vorzugsweise und allgemein betrachtet auch eine Beurteilung durch das Auswertesystem vorgenommen, ob diese zumindest eine Beschleunigung und/oder dieses zumindest eine Bremsen des Vorderfahrzeugs erforderlich gewesen wäre und/oder in der Stärke und/oder für die jeweilige Zeitdauer erforderlich gewesen wäre. Insbesondere werden für diese Beurteilung auch die Umgebungsparameter berücksichtigt. Denn ergibt die Analyse, dass das Beschleunigen und/oder Bremsen aufgrund der Gesamtsituation, insbesondere auch der Verkehrssituation, erforderlich und somit korrekt war, kann in einem Ausführungsbeispiel das Durchführen der Schritte e) und f), insbesondere der Schritte d), e) und f), nicht erfolgen. Wird jedoch erkannt, dass dies nicht erforderlich gewesen wäre, werden in einem Ausführungsbeispiel die Schritte e) und f), insbesondere die Schritte d), e) und f) durchgeführt. In einem Ausführungsbeispiel kann diese oben genannte Beurteilung auch entfallen.

In einem Ausführungsbeispiel werden die Beschleunigungs- und/oder Bremsinformationen und/oder der Umgebungsparameter bei einer Analyse in einem Zeitintervall, welches auch als Analysezeitintervall bezeichnet werden kann, erfasst und/oder ausgewertet, wobei insbesondere das Analysezeitintervall so lange gewählt wird, dass ausreichend Beschleunigungs- und/oder Bremsinformationen und/oder der Umgebungsparameter erfasst werden, um das Vorderfahrzeug zu einer der zumindest zwei Fahrverhaltensklassen zuzuordnen.

Damit wird erreicht, dass das Fahrverhalten des Vorderfahrzeugs zunächst beobachtet wird, um entscheiden zu können, insbesondere durch das Auswertesystem, ob die Schritte e) und f), insbesondere die Schritte d, e) und f), durchgeführt werden sollen. Das Analysezeitintervall kann festvorgegeben sein. Es kann beispielweise abhängig von der aktuellen Umgebung der Fahrzeuge und/oder der Art der Fahrbahn, auf welcher sich die Fahrzeuge bewegen, und/oder der aktuellen Verkehrsdichte und/oder der Art des Vorderfahrzeugs und/oder der Art des Fahrzeugs fest vorgegeben sein. Möglich ist es jedoch auch, dass das Analysezeitintervall dynamisch verändert wird. Dies kann ebenfalls von zumindest einigen der oben genannten Parameter abhängen, insbesondere deren Änderung, wenn dies möglich ist. Eine dynamische Änderung kann auch von den oben genannten Beschleunigungs- und/oder Bremsinformationen selbst abhängen.

Eine solche Analyse kann einmal oder vorzugsweise mehrmals während einer Folgefahrt durchgeführt werden. Damit kann auch auf ein verändertes Fahrverhalten des Vorderfahrzeugs während einer Folgefahrt reagiert werden. Eine Analyse kann mindestens einige Sekunden, beispielweise mindestens 10 Sekunden, insbesondere mindestens 30 Sekunden dauern.

In einem Ausführungsbeispiel wird das Fahrzeug abhängig von der bestimmten Abweichung längsgeführt, indem Dynamikparameter des elektronischen Abstandshaltesystems eingestellt werden.

Die einzustellenden Dynamikparameter des elektronischen Abstandshaltesystems sind beispielsweise eine maximal zulässige Sollbeschleunigung und/oder ein maximaler Längsruck und/oder eine maximale Beschleunigungsdauer und/oder eine maximal zulässige Eintauchtiefe und/oder ein minimaler Planungshorizont. Insbesondere ergibt sich die bestimmte Abweichung definiert und beabsichtigt aus den eingestellten Dynamikparametern. Dadurch wird ruckartiges Bremsen oder Beschleunigen des Fahrzeugs reduziert.

Zum Beispiel gibt die maximal zulässige Sollbeschleunigung an, wie stark das Fahrzeug gebremst oder beschleunigt wird, wenn das Vorderfahrzeug bremst oder beschleunigt. Beschleunigt also beispielsweise das Vorderfahrzeug stärker als die eingestellte maximal zulässige Sollbeschleunigung des Fahrzeugs es vorgibt, dann wird die bestimmte Abweichung vergrößert. Verringert dann beispielsweise das Vorderfahrzeug seine Beschleunigung auf einen Wert unterhalb der Sollbeschleunigung, dann schließt das Fahrzeug beispielsweise wieder bis zum vorgegebenen Sollabstand zum Vorderfahrzeug auf.

Der Längsruck gibt insbesondere vor, wie schnell die Stärke der Beschleunigung und/oder Verzögerung maximal verändert wird. Insbesondere geben die maximal zulässige Sollbeschleunigung und der maximale Längsruck vor, wie schnell das elektronische Abstandshaltesystem auf eine Abstandsänderung zum Vorderfahrzeug reagiert. Der minimale Planungshorizont gibt beispielsweise vor, welche Streckenlänge im Voraus bei der Fahrplanung berücksichtigt wird.

Wird beispielsweise das Vorderfahrzeug einer Fahrverhaltensklasse der zumindest zwei Fahrverhaltensklassen zugeordnet, die vorwiegend einem homogenen, vorausschauenden Fahrverhalten entspricht, wird zum Beispiel die maximal zulässige Sollbeschleunigung und/oder der maximal zulässige Längsruck größer eingestellt als bei einem Vorderfahrzeug, das der Fahrverhaltensklasse zugeordnet wird, die einem inhomogenen Fahrverhalten entspricht. Zum Beispiel wird der minimale Planungshorizont bei einem homogenen Fahrverhalten des Vorderfahrzeugs verringert und bei einem inhomogenen Fahrverhalten des Vorderfahrzeugs vergrößert.

Dadurch wird ein inhomogenes Fahrverhalten des Vorderfahrzeugs kompensiert. Bei einem homogenen Fahrverhalten des Vorderfahrzeugs wird beispielsweise der Sollabstand nahezu konstant gehalten. Insbesondere ist eine verbleibende Restabweichung vom Sollabstand in diesem Fall unbeabsichtigt.

In einem Ausführungsbeispiel erfolgt die Zuordnung des Vorderfahrzeugs zu einer der zumindest zwei Fahrverhaltensklassen nach einem, insbesondere festgelegten, Zeitintervall und/oder nach einer vorgegebenen Häufigkeit für ein Auftreten des Umgebungsparameters. Das Zeitintervall kann das oben genannte Analysezeitintervall sein.

Beispielsweise wird die Zuordnung nach dem festgelegten Zeitintervall überprüft und/oder erneut zugeordnet. Das festgelegte Zeitintervall beträgt beispielsweise zwischen 20 Sekunden und 80 Sekunden, insbesondere zwischen 30 Sekunden und 60 Sekunden. Die Häufigkeit für das Auftreten des Umgebungsparameters beträgt beispielsweise zwischen 3 und 15, insbesondere zwischen 8 und 12, insbesondere 10. Zum Beispiel erfolgt die Zuordnung nach einem zehnmaligen Wechsel der Geschwindigkeitsbegrenzung. Insbesondere wird das Vorderfahrzeug bei Beginn der Folgefahrt initial der homogenen Fahrverhaltensklasse zugeordnet.

Dieses Ausführungsbeispiel ermöglicht eine verbesserte Zuordnung des Vorderfahrzeugs zu einer Fahrverhaltensklasse.

In einem Ausführungsbeispiel erfolgt die Zuordnung in Schritt d) abhängig von einer Überschreitungshäufigkeit von vorgegebenen Grenzwerten für Werte der Beschleunigung- und/oder Bremsinformation bei einem vorgegebenen Umgebungsparameter. Dadurch kann die Zuordnung mit einem verringerten Rechenaufwand für das Auswertesystem erfolgen.

Beispielsweise ist die Überschreitungshäufigkeit eine relative Häufigkeit. Zum Beispiel werden zehn Wechsel der Geschwindigkeitsbeschränkung analysiert. Reagiert das Vorderfahrzeug in einem Beispiel mehr als zwei Mal, insbesondere mehr als drei Mal, insbesondere mehr als fünf Mal mit einem starken Beschleunigen und/oder Bremsen auf die Änderung der Geschwindigkeitsbegrenzung, dann wird das Vorderfahrzeug beispielsweise in die Fahrverhaltensklasse zugeordnet, die einem inhomogenen Fahrverhalten entspricht. Beispielsweise bedeutet starkes Bremsen und/oder Beschleunigen eine positive oder negative Beschleunigung von mehr als 2 m/s², insbesondere mehr als 3 m/s².

In einem Ausführungsbeispiel wird ein Streckenparameter an das Auswertesystem bereitgestellt. Abhängig von dem Streckenparameter wird die Abweichung bestimmt.

Bei dem Streckenparameter handelt es sich insbesondere um eine Straßenkategorie, beispielsweise Autobahn oder Landstraße oder Ortsstraße. Es ist möglich, dass der Streckenparameter dem Umgebungsparameter entspricht und/oder von diesem abhängt. Der Streckenparameter wird insbesondere mit dem Erfassungssystem erfasst. Es ist auch möglich, dass der Streckenparameter einer Häufigkeit des Umgebungsparameters innerhalb einer vorgegeben Zeitspanne entspricht.

Zum Beispiel wird abhängig von dem Streckenparameter bestimmt, ob die Einstellung der Dynamikparameter gemäß der zugeordneten Klasse erfolgt oder ob eine Standardeinstellung für die Dynamikparameter vorgenommen wird. Wird beispielsweise als Streckenparameter die Straßenkategorie "Autobahn" bereitgestellt, dann ist es möglich, dass für die Dynamikparameter die Standardeinstellung vorgenommen wird. Die Standardeinstellung der Dynamikparameter entspricht beispielsweise der gleichen Einstellung der Dynamikparameter, die der Fahrverhaltensklasse zugeordnet sind, die einem homogenen Fahrverhalten des entspricht. Dadurch wird in diesem Beispiel die Wahrscheinlichkeit reduziert, dass aufgrund von trägem Einhalten des Sollabstands sich andere Autos in den Abstand drängeln. Diese Problematik zeigt sich in der Regel bei Landstraßen nicht, aber bei häufigem Wechsel der Geschwindigkeitsbegrenzung und/oder Kurven hat ein inhomogenes Fahrverhalten des Vorderfahrzeugs erhöhte Auswirkungen auf das Fahrzeug. Daher ist es beispielsweise bei einem Streckenparameter, der einem zeitlich hintereinander häufigen Auftreten der Umgebungsparameter "Kurven" und/oder "Geschwindigkeitsbegrenzung" entspricht, vorteilhaft, wenn die Einstellung der Dynamikparameter gemäß der zugeordneten Klasse erfolgt.

In einem Ausführungsbeispiel wird mit dem Auswertesystem ein Wert für die Beschleunigungs- und/oder Bremsinformation des Vorderfahrzeugs für einen bereitgestellten Umgebungsparameter vorhergesagt. Abhängig von dieser Vorhersage wird die Abweichung im Schritt f) bestimmt.

So vergrößert das Fahrzeug beispielsweise den Abstand im Vergleich zum Sollabstand zum Vorderfahrzeug bereits, bevor das Vorderfahrzeug stark bremst. Dies erfolgt beispielsweise dann, wenn als Umgebungsparameter eine Kurve und/oder eine niedrigere als die bisher geltende Geschwindigkeitsbegrenzung bereitgestellt wird. Insbesondere liegt der Umgebungsparameter noch zeitlich und örtlich vor einer zu befahrenden Strecke des Vorderfahrzeugs. Ist das Vorderfahrzeug beispielsweise der inhomogenen Fahrverhaltensklasse zugeordnet, dann wird in dieser Situation ein hoher Wert für die negative Beschleunigung eines zu erwartenden Bremsvorgangs vorhergesagt. Somit wird der Fahrkomfort weiter erhöht.

In einem Ausführungsbeispiel wird überprüft, ob ein aktuelles Vorderfahrzeug identisch zu dem bisher gefolgten Vorderfahrzeug ist. Dadurch wird insbesondere verhindert, dass eine veraltete Zuordnung des Vorderfahrzeugs als Basis für die Bestimmung der Abweichung verwendet wird.

In einem Ausführungsbeispiel wird eine Zuordnungsvorschrift zum Zuordnen einer der Fahrverhaltensklassen von den zumindest zwei Fahrverhaltensklassen abhängig von einer Beschleunigung des Fahrzeugs angepasst.

Die Zuordnungsvorschrift weist beispielsweise die Überschreitungshäufigkeit und/oder vorgegebene Grenzwerte für Werte der Beschleunigungs- und/oder Bremsinformation auf. Die Zuordnungsvorschrift wird insbesondere abhängig von einem Fahrverhalten des Fahrzeugs, welches durch die Beschleunigung des Fahrzeugs charakterisiert ist, angepasst. Überträgt sich beispielsweise ein inhomogenes Fahrverhalten des Vorderfahrzeugs auf das Fahrzeug, dann wird beispielweise die Zuordnungsvorschrift derart geändert, dass das Vorderfahrzeug der Fahrverhaltensklasse zugeordnet wird, die einem inhomogenen Fahrverhalten entspricht. Ist dies beispielsweise bereits der Fall, dann wird beispielsweise eine größere Abweichung für diese Fahrverhaltensklasse bestimmt, insbesondere werden beispielsweise die Dynamikparameter angepasst.

Durch dieses Ausführungsbeispiel kann die Zuordnung des Vorderfahrzeugs zu einer der zumindest zwei Fahrverhaltensklassen und/oder die Bestimmung der Abweichung weiter verbessert werden. Dadurch wird der Fahrkomfort weiter erhöht.

In einem Ausführungsbeispiel wird der Sollabstand abhängig von einem Adaptionsdatensatz bestimmt. Der Adaptionsdatensatz wird insbesondere nach dem folgenden Verfahrensschritten erzeugt:
- Durchführen einer ersten Referenzfahrt mit einem ersten Flottenfahrzeug einer Fahrzeugflotte mit zumindest zwei Flottenfahrzeugen;
- Erfassen von zumindest einer ersten Einflussgröße und einem ersten Abstand von dem ersten Flottenfahrzeug zu einem vorausfahrenden Vorderfahrzeug während der ersten Referenzfahrt;
- Durchführen einer zweiten Referenzfahrt von einem zweiten Flottenfahrzeug der Fahrzeugflotte;
- Erfassen von zumindest einer zweiten Einflussgröße und einem zweiten Abstand von dem zweiten Flottenfahrzeug zu einem weiteren vorausfahrenden Vorderfahrzeug während der zweiten Referenzfahrt;
- Bestimmen des Adaptionsdatensatzes in Abhängigkeit von der ersten Einflussgröße und der zweiten Einflussgröße und von dem ersten Abstand und dem zweiten Abstand.

Mit dem so erzeugten Adaptionsdatensatz kann beispielsweise das elektronische Abstandshaltesystem betrieben werden. Mit anderen Worten wird durch das Verfahren ein Adaptionsdatensatz erzeugt, mit dem ein Abstand abhängig von dem Sollparameter zwischen dem Fahrzeug und einem vorrausfahrendem Vorderfahrzeug dynamisch und situationsspezifisch eingestellt werden kann.

Es ist vorteilhaft, wenn eine Vielzahl an Referenzfahrten durchgeführt werden. Insbesondere wird während den Referenzfahrten jeweils eine Vielzahl an Messwerten der Einflussgrößen erfasst. Je mehr Referenzfahrten durchgeführt, je mehr verschiedene Einflussgrößen und je mehr Messwerte der jeweiligen Einflussgrößen dabei erfasst werden, desto aussagekräftiger und differenzierter kann der Adaptionsdatensatz bestimmt werden.

Die erste und/oder die zweite Einflussgröße ist beispielsweise zumindest eine der folgenden Größen: Geschwindigkeit des jeweiligen Flottenfahrzeugs und/oder des jeweils vorausfahrenden Vorderfahrzeugs, eine Änderung der Geschwindigkeit des jeweiligen Flottenfahrzeugs und/oder des jeweils vorausfahrenden Vorderfahrzeugs, eine Wettersituation, eine Verkehrsdichte, eine Temperatur, ein eingestelltes Fahrprofil des Flottenfahrzeugs, ein Fahrzeugtyp des Flottenfahrzeugs und/oder des Vorderfahrzeugs, eine Tageszeit und/oder eine Helligkeit, und/oder Jahreszeit, eine Straßenkategorie, ein Technologiekonzept eines Antriebssystems des Flottenfahrzeugs, ein Fahrertyp des Flottenfahrzeugs und/oder des Vorderfahrzeugs, eine befahrene Spur einer Fahrbahn, ein Betriebszustand eines Abstandshaltesystems zumindest des Flottenfahrzeugs, ein Fahrbahnreibwert, eine Geschwindigkeitsbegrenzung, ein Fahrbahnzustand, ein Abstand zu einem hinterherfahrendem Hinterfahrzeug. Die aufgezählten Größen können beispielsweise auch als Typ der Einflussgröße oder als Label oder Deskriptoren bezeichnet werden.

Die erfassten Einflussgrößen und Abstände der Referenzfahrten können als Flottendaten bezeichnet werden.

Ein weiterer Aspekt der Erfindung betrifft ein elektronisches Abstandshaltesystem für ein Fahrzeug mit einem Auswertesystem, wobei das Abstandshaltesystem dazu eingerichtet ist, das erfindungsgemäße Verfahren durchzuführen.

Ausführungsbeispiele, Vorteile und Merkmale des erfindungsgemäßen Verfahrens sind Ausführungsbeispiele, Vorteile und Merkmale des erfindungsgemäßen Abstandshaltesystems.

Die Erfindung umfasst auch die Kombinationen der Merkmale der beschriebenen Ausführungsformen.

Im Folgenden werden Ausführungsbeispiele der Erfindung anhand schematischer Zeichnungen beschrieben. Hierzu zeigt:
- Fig. 1: eine schematische Darstellung einer beispielhaften Situation, in der ein Ausführungsbeispiel eines erfindungsgemäßen Verfahrens zur Längsführung eines Fahrzeugs in Bezug zu einem vorausfahrende Vorderfahrzeug mit einem Ausführungsbeispiel eines aktivierten erfindungsgemäßen elektronischen Abstandshaltesystems durchgeführt wird;
- Fig. 2: ein schematisches Ablaufdiagramm eines Ausführungsbeispiels des erfindungsgemäßen Verfahrens; und
- Fig. 3: ein beispielhaftes resultierendes Beschleunigungsdiagramm des Fahrzeugs und des Vorderfahrzeugs bei Durchführung eines Ausführungsbeispiels des erfindungsgemäßen Verfahrens.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

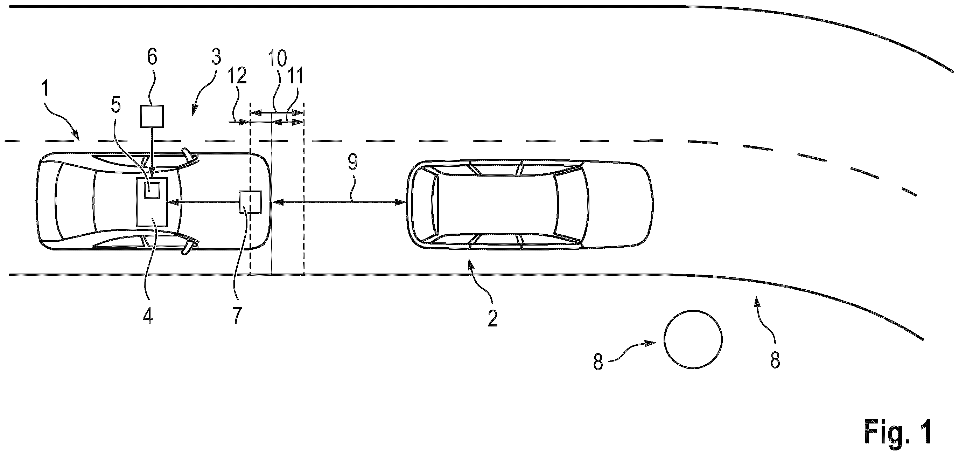

In Fig. 1 ist eine beispielhafte Situation dargestellt, in der ein Ausführungsbeispiel eines Verfahrens zur Längsführung eines Fahrzeugs 1 in Bezug zu einem vorausfahrenden Vorderfahrzeug 2 mit einem Ausführungsbeispiel eines elektronischen Abstandshaltesystems 3 durchgeführt wird. Das Abstandshaltesystem 3 weist ein Auswertesystem 4, insbesondere mit einer Auswerteeinheit 5 auf. Das Abstandshaltesystem 3 kann insbesondere ein Erfassungssystem, beispielsweise mit einer ersten Erfassungseinheit 5 und einer zweiten Erfassungseinheit 6, aufweisen. Insbesondere ist das Abstandshaltesystem 3 dazu eingerichtet, ein Ausführungsbeispiel des Verfahrens zur Längsführung des Fahrzeugs 1 auszuführen.

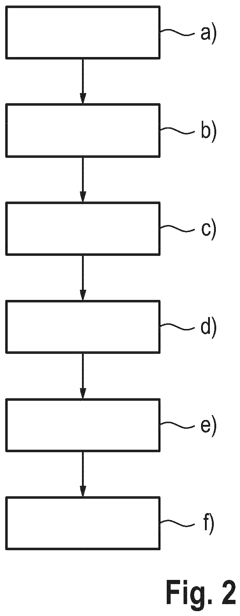

Fig. 2 zeigt ein schematisches Ablaufdiagramm eines Ausführungsbeispiels des Verfahrens zur Längsführung des Fahrzeugs 1.

Dazu wird in einem Schritt a) zumindest ein Umgebungsparameter 8 betreffend eine Umgebung des Fahrzeugs 1 an das Auswertesystem 4 bereitgestellt. Bei dem Umgebungsparameter 8 handelt es sich beispielsweise um eine Kurvenkrümmung und/oder eine Geschwindigkeitsbeschränkung. In einem Ausführungsbeispiel wird der Umgebungsparameter 8 zumindest mit der ersten Erfassungseinheit 6 erfasst. Die erste Erfassungseinheit 6 ist dazu beispielsweise als Kamera und/oder als Kommunikationsschnittstelle zum Empfangen von Kartendaten ausgebildet. Insbesondere bestimmt das Erfassungssystem aus erfassten Kamerabildern beziehungsweise Kamerasignalen und/oder Kartendaten den Umgebungsparameter und stellt diesen an das Auswertesystem 4 bereit. Als Kurvenkrümmung kann beispielsweise ein Kurvenradius einer zu befahrenden Strecke bereitgestellt werden.

In der in Fig. 1 dargestellten Situation erfasst beispielsweise die erste Erfassungseinheit 6 eine Geschwindigkeitsbegrenzung und eine Kurvenkrümmung als Umgebungsparameter 8 und stellt diese an das Auswertesystem 4 bereit.

In einem Schritt b) wird ein Sollabstand 9, mit welchem das Fahrzeug 1 dem Vorderfahrzeug 2 folgen soll, an das Auswertesystem 4 bereitgestellt. Insbesondere weist das Auswertesystem 4 eine Abstandsrecheneinheit, wie eine elektronische Schaltung und/oder eine Prozessor, auf, welche den Sollabstand 9 bestimmt.

In einem Schritt c) wird eine Beschleunigungs- und/oder Bremsinformation betreffend das vor dem Fahrzeug 1 fahrende Vorderfahrzeug 2 an das Auswertesystem 4 bereitgestellt. Zum Beispiel erfasst dazu die zweite Erfassungseinheit 7 beispielsweise eine Stärke der Beschleunigung und/oder des Bremsens des Vorderfahrzeugs 2 und stellt diese als Beschleunigungs- und/oder Bremsinformation an das Auswertesystem 4 bereit. Dies erfolgt vorzugsweise während zumindest einer Analyse, insbesondere in zumindest einem Analysezeitintervall, in welcher das Fahrverhalten des Vorderfahrzeugs 2 analysiert wird. Beispielsweise wird auch eine Dauer des Beschleunigungs- und/oder Verzögerungsvorgangs als Beschleunigungs- und/oder Bremsinformation an das Auswertesystem 4 bereitgestellt.

Bei der Analyse wird vorzugsweise und allgemein betrachtet auch eine Beurteilung durch das Auswertesystem 4 vorgenommen, ob diese zumindest eine Beschleunigung und/oder dieses zumindest eine Bremsen des Vorderfahrzeugs 2 erforderlich gewesen wäre und/oder in der Stärke und/oder für die jeweilige Zeitdauer erforderlich gewesen wäre. Insbesondere werden für diese Beurteilung auch die Umgebungsparameter berücksichtigt. Denn ergibt die Analyse, dass das Beschleunigen und/oder Bremsen aufgrund der Gesamtsituation, insbesondere auch der Verkehrssituation, erforderlich und somit korrekt war, kann in einem Ausführungsbeispiel das Durchführen der Schritte e) und f) nicht erfolgen. Wird jedoch erkannt, dass dies nicht erforderlich gewesen wäre, werden in einem Ausführungsbeispiel die Schritte e) und f) durchgeführt. In einem Ausführungsbeispiel kann diese oben genannte Beurteilung auch entfallen.

Zum Beispiel erfasst die zweite Erfassungseinheit 7 in der in Fig. 1 gezeigten Situation ein Bremsen des Vorderfahrzeugs 2 mit einer Stärke von beispielsweise mehr als 2 m/s², insbesondere mehr als 3 m/s² für beispielsweise mehr als 1 Sekunde, insbesondere mehr als 4 Sekunden. Dies wird dann insbesondere als Beschleunigungs- und/oder Bremsinformation an das Auswertesystem 4 bereitgestellt.

In einem Schritt d) wird das Vorderfahrzeug 2 zu einer von zumindest zwei verschiedenen vorgegebenen Fahrverhaltensklassen abhängig von dem Umgebungsparameter 8 und der Beschleunigungs- und/oder Bremsinformation mit dem Auswertesystem 4 zugeordnet. Zum Beispiel sind zwei verschiedene Fahrverhaltensklassen vorgegeben. Zum Beispiel repräsentiert eine erste Fahrverhaltensklasse der zwei Fahrverhaltensklassen ein homogenes vorausschauendes Fahrverhalten des Vorderfahrzeugs 2. Zum Beispiel repräsentiert eine zweite Fahrverhaltensklasse der zwei Fahrverhaltensklassen ein inhomogenes Fahrverhalten des Vorderfahrzeugs 2.

In dem in Fig. 1 erläuterten Beispiel wird das Vorderfahrzeug 2 beispielsweise der zweiten Fahrverhaltensklasse zugeordnet, da das kurze starke Bremsen, insbesondere kurz vor der Geschwindigkeitsbegrenzung beziehungsweise Kurve ein inhomogenes Fahrverhalten repräsentiert.

In einem Schritt e) wird eine zumindest temporär erlaubte Abweichung von dem bereitgestellten Sollabstand 9 abhängig von der zugeordneten Fahrverhaltensklasse des Vorderfahrzeugs 2 mit dem Auswertesystem 4 bestimmt.

In einem Schritt f) wird das Fahrzeug 1 mit dem Abstandshaltesystem 3 als nachfolgend zu dem Vorderfahrzeug abhängig von dem Sollabstand 9 und der bestimmten erlaubten Abweichung 10 zumindest temporär längsgeführt. Insbesondere werden dazu Dynamikparameter des elektronischen Abstandshaltesystems 3 eingestellt. Die Einstellung erfolgt dabei insbesondere abhängig von der zugeordneten Fahrverhaltensklasse. Beispielsweise wird als Dynamikparameter eine maximal zulässige Sollbeschleunigung und/oder eine maximal zulässige Eintauchtiefe 11 eingestellt.

Zum Beispiel wird in dem zu Fig. 1 erläuterten Beispiel als Abweichung eingestellt, dass der Sollabstand 9 um eine Eintauchtiefe 11 verringert wird. Das bedeutet insbesondere, dass das Fahrzeug 1 einen tatsächlichen Abstand im Vergleich zu dem Sollabstand 9 um die Eintauchtiefe 11 verringert und deshalb weniger stark abbremst als das Vorderfahrzeug 2. Außerdem ist es möglich, dass aufgrund von Beschleunigungs- und/oder Bremsinformation und damit zeitlich beziehungsweise örtlich verknüpftem Umgebungsparameter 8 einer vorangegangenen Fahrt hinter demselben Vorderfahrzeug 2 das Auswertesystem 4 das starke Abbremsen des Vorderfahrzeugs 2 bei dem vorliegenden Umgebungsparameter 8 vorhersagt. In diesem Fall ist es möglich, dass als Teil der Abweichung 10 ein Pufferabstand 12 bestimmt wird. Beispielsweise wird in diesem Fall der tatsächliche Abstand bereits vor dem zu erwartenden starken Abbremsen des Vorderfahrzeugs 2 um den Pufferabstand 12 vergrößert im Vergleich zu dem Sollabstand 9.

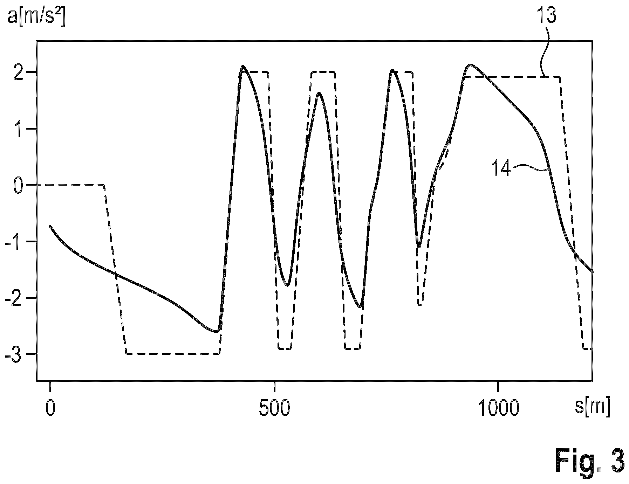

Fig. 3 zeigt ein beispielhaftes resultierendes Beschleunigungsdiagramm des Fahrzeugs 1 und des Vorderfahrzeugs 2 bei Durchführung eines Ausführungsbeispiels des Verfahrens zur Längsführung des Fahrzeugs 1. Der erste Beschleunigungsverlauf 13 des Vorderfahrzeugs 2 zeigt in Fig. 3 die Stärke der Beschleunigung beziehungsweise des Bremsens über einen zeitlichen beziehungsweise örtlichen Verlauf. Bei diesem beispielhaften Verlauf verzögert das Vorderfahrzeug 2 stark, beispielsweise bis zu -3 m/s² und es beschleunigt ebenfalls stark bis zu 2 m/s². Dieses Fahrverhalten ist beispielsweise für einen Insassen unkomfortabel und insbesondere kann es zu einem erhöhten Energieverbrauch des Fahrzeugs führen. Der erste Beschleunigungsverlauf 13 des Vorderfahrzeugs 2 charakterisiert ein inhomogenes Fahrverhalten. Das Auswertesystem 4 ordnet das Vorderfahrzeug 2 mit diesem gezeigten Beschleunigungsverlauf 13 beispielsweise der zweiten Fahrverhaltensklasse, die ein inhomogenes Fahrverhalten repräsentiert, zu. Insbesondere sind der zweiten Fahrverhaltensklasse Dynamikparameter des Abstandshaltesystems 3 zugeordnet, die zu einer größeren Abweichung 10 führen, als die Dynamikparameter, die der ersten Fahrverhaltensklasse zugeordnet sind. Durch die temporär zulässige Abweichung 10 wird beispielsweise das inhomogene Fahrverhalten des Vorderfahrzeugs 2 kompensiert.

Der zweite Beschleunigungsverlauf 14 des Fahrzeugs 1 weist geringere Stärken der Beschleunigung und/oder des Bremsens auf. Insbesondere werden die maximalen Stärken der Beschleunigung und/oder des Bremsens für eine kürzere Zeit gehalten als bei dem ersten Beschleunigungsverlauf 13 des Vorderfahrzeugs 2. Dadurch ist ein komfortableres Fahrverhalten des Fahrzeugs 1 erreicht.

### Bezugszeichenliste

- 1: Fahrzeug
- 2: Vorderfahrzeug
- 3: Abstandshaltesystem
- 4: Auswertesystem
- 5: Auswerteeinheit
- 6: erste Erfassungseinheit
- 7: zweite Erfassungseinheit
- 8: Umgebungsparameter
- 9: Sollabstand
- 10: Abweichung
- 11: Eintauchtiefe
- 12: Pufferabstand
- 13: erster Beschleunigungsverlauf
- 14: zweiter Beschleunigungsverlauf

## Patentansprüche

1. Verfahren zur Längsführung eines Fahrzeugs (1) in Bezug zu einem vorausfahrenden Vorderfahrzeug (2) mittels eines elektronischen Abstandshaltesystems (3), aufweisend die Schritte:
a) Bereitstellen von zumindest einem Umgebungsparameter (8) betreffend eine Umgebung des Fahrzeugs (1) an ein Auswertesystem (4);
b) Bereitstellen eines Sollabstands (9), mit welchem das Fahrzeug (1) dem Vorderfahrzeug (2) folgen soll, an das Auswertesystem (4);
c) Bereitstellen von Beschleunigungs- und/oder Bremsinformation betreffend das vor dem Fahrzeug (1) fahrende Vorderfahrzeug (2) an das Auswertesystem (4);
d) Zuordnen des Vorderfahrzeugs (2) zu einer von zumindest zwei verschiedenen, vorgegebenen Fahrverhaltensklassen abhängig von dem Umgebungsparameter (8) und der Beschleunigungs- und/oder Bremsinformation mit dem Auswertesystem (4);
e) Bestimmen einer zumindest temporär erlaubten Abweichung (10) von dem bereitgestellten Sollabstand (9) abhängig von der zugeordneten Fahrverhaltensklasse des Vorderfahrzeugs (2) mit dem Auswertesystem (4);
f) Zumindest temporäres Längsführen des Fahrzeugs (1) mit dem Abstandshaltesystem (3) als Nachfolgen zu dem Vorderfahrzeug (2) abhängig von dem Sollabstand (9) und der bestimmten, erlaubten Abweichung (10).

2. Verfahren nach Anspruch 1, wobei als Beschleunigungs- und/oder Bremsinformation eine Anzahl von Änderungen von Beschleunigungs- und/oder Bremsvorgängen in einem Zeitintervall und/oder eine Stärke der Beschleunigung und/oder des Bremsens bei einem Bremsvorgang und/oder Beschleunigungsvorgang und/oder eine Zeitdifferenz zwischen Beschleunigungs- und/oder Bremsvorgängen und/oder ein Verhältnis von einer Zeitdauer eines Beschleunigungsvorgangs zu einer Zeitdauer eines Bremsvorgangs bereitgestellt wird.

3. Verfahren nach Anspruch 1 oder 2, wobei das Fahrzeug (1) abhängig von der bestimmten Abweichung (10) längsgeführt wird, indem Dynamikparameter des elektronischen Abstandshaltesystems (3) eingestellt werden.

4. Verfahren nach einem der vorhergehenden Ansprüche, wobei die Zuordnung des Vorderfahrzeugs (2) zu einer der zumindest zwei Fahrverhaltensklassen nach einem festgelegten Zeitintervall erfolgt und/oder nach einer vorgegebenen Häufigkeit für ein Auftreten des Umgebungsparameters (8).

5. Verfahren nach einem der vorhergehenden Ansprüche, wobei die Zuordnung in Schritt d) abhängig von einer Überschreitungshäufigkeit von vorgegebenen Grenzwerten für Werte der Beschleunigungs- und/oder Bremsinformation bei einem vorgegebenen Umgebungsparameter (8) erfolgt.

6. Verfahren nach einem der vorhergehenden Ansprüche, wobei ein Streckenparameter an das Auswertesystem (4) bereitgestellt wird und abhängig von dem Streckenparameter die Abweichung (10) bestimmt wird.

7. Verfahren nach einem der vorhergehenden Ansprüche, wobei mit dem Auswertesystem (4) ein Wert für die Beschleunigungs- und/oder Bremsinformation des Vorderfahrzeugs (2) für einen bereitgestellten Umgebungsparameter (8) vorhergesagt wird und abhängig von dieser Vorhersage die Abweichung (10) im Schritt f) bestimmt wird.

8. Verfahren nach einem der vorhergehenden Ansprüche, wobei überprüft wird, ob ein aktuelles Vorderfahrzeug (2) identisch zu dem bisher gefolgtem Vorderfahrzeug (2) ist.

9. Verfahren nach einem der vorhergehenden Ansprüche, wobei eine Zuordnungsvorschrift zum Zuordnen einer der Fahrverhaltensklassen von den zumindest zwei Fahrverhaltensklassen abhängig von einer Beschleunigung des Fahrzeugs (1) angepasst wird.

10. Abstandshaltesystem (3) für ein Fahrzeug (1) mit einem Auswertesystem (4), wobei das Abstandshaltesystem (3) dazu eingerichtet ist, ein Verfahren nach einem der vorhergehenden Ansprüche durchzuführen.
